# EUROPÄISCHE PATENTANMELDUNG

(11) **EP 0 736 992 A2**
(43) Veröffentlichungstag der Anmeldung: **09.10.1996**
(21) Anmeldenummer: 96103724.9
(22) Anmeldetag: 09.03.1996
(51) Int. Cl.: H04M 1/60, H04M 1/72

(54) **Lauthöreinrichtung für schnurlose Telefone**

(30) Priorität: 01.04.1995 DE 19512387
(71) Anmelder: Hagenuk Telecom GmbH, 24118 Kiel (DE)
(72) Erfinder: Gennrich, Bernd, Dipl.-Ing., 24145 Kiel (DE)
(74) Vertreter: Hansmann, Dierk, Dipl.-Ing.

(57) **Zusammenfassung**

Die Lauthöreinrichtung ist in einem getrennt von der Basisstation ausgebildeten Gehäuse ausgebildet. Der Lautsprecher ist von einem Verstärker gespeist und der Verstärker ist über einen Empfänger mit der Basisstation auf einer drahtlosen Übertragungsstrecke verbunden. Der Verstärker und der Empfänger werden von einer Steuerung eingestellt. Die Steuerung weist eine Frequenzfortschaltung zur Kanalüberwachung auf. Die Frequenzfortschaltung spricht nacheinander alle empfangbaren Kanäle an, um bei einer Erkennung eines belegten Kanales eine Kanalkennungsüberprüfung zu aktivieren.

## Beschreibung

Die Erfindung betrifft eine Lauthöreinrichtung für schnurlose Telefone, bei denen mindestens ein Mobilteil schnurlos von einer Übertragungsstrecke mit einer Basisstation gekoppelt ist.

Bei schnurlosen Telefonen gemäß dem Stand der Technik sind Einrichtungen zum Lauthören im Bereich der Basisstation angeordnet. Dies ist nachteilig, wenn mehrere Mobilteile an eine gemeinsame Basisstation angeschlossen werden und wenn die Mobilteile in größerer Entfernung von der Basisstation benutzt werden. Es stellt sich hierbei heraus, daß in der Regel die Lauthöreinrichtung nicht verwendungsfähig ist, da keine örtliche Überdeckung von der Anordnung der Lauthöreinrichtung sowie der Anordnung der Personen, die die Lauthöreinrichtung benutzen wollen, vorliegt.

Aus der DE 94 02 343 U1 ist es bereits bekannt, ein schnurloses Telefon mit einer Lauthöreinrichtung zu kombinieren. Das schnurlose Telefon ist drahtlos mit einer Basisstation verbunden.

In der DE 37 36 608 C1 wird eine Ladestation für schnurlose Telefone beschrieben. Das schnurlose Telefon ist derart in die Ladestation einsetzbar, daß die Tastatur, der Lautsprecher und das Mikrofon für eine Benutzung zugänglich sind. Im Bereich der Ladestation ist eine Lauthöreinrichtung angeordnet, die in Kombination mit dem schnurlosen Telefon benutzbar ist.

Aufgabe der vorliegenden Erfindung ist es, ein Telefon der einleitend genannten Art derart zu konstruieren, daß der Benutzungskomfort vergrößert wird.

Diese Aufgabe wird erfindungsgemäß dadurch gelöst, daß die Lauthöreinrichtung als ein in einem getrennt von der Basisstation und getrennt vom Mobilteil ausgebildeten Gehäuse angeordneter Lautsprecher ausgebildet ist, der von einem Verstärker gespeist ist, daß der Verstärker mit einem Empfänger verbunden ist, der von einer Steuerung eingestellt ist und der über eine drahtlose Übertragungsstrecke mit der Basisstation verbunden ist, daß die Steuerung zur Kanalüberwachung eine Frequenzfortschaltung aufweist, die nacheinander alle empfangbaren Kanäle anspricht, um bei einer Erkennung eines belegten Kanales eine Kanalkennungsüberprüfung zu aktivieren, die den Lautsprecher bei einer Erkennung des zugeordneten Mobilteils und einer Erkennung eines Lauthörsignals einschaltet und daß die drahtlose Übertragungsstrecke zusätzlich zu der drahtlosen Übertragungsstrecke zwischen der Basisstation und dem Mobilteil vorgesehen ist.

Durch die Anordnung der Lauthöreinrichtung in einem von der Basisstation separaten Gehäuse sowie der Verwendung der entsprechenden Kommunikationsschnittstellen ist es möglich, eine transportable und nicht an die Anschlußdose (TAE) gebundene Lauthöreinrichtung bereitzustellen. Die Verwendung des von der Basisstation getrennten Gehäuses ermöglicht es darüber hinaus, ein kräftiges und voluminöses Lauthören zu realisieren. Der verwendete Lautsprecher kann beliebig groß gewählt werden und mit einer akustischen Charakteristik versehen werden, die den jeweiligen Vorgaben entspricht und muß nicht in das gewöhnlich kleine Gehäuse der Basisstation hineinpassen.

Zur Gewährleistung einer definierten Aktivierung und Deaktivierung der Lauthöreinrichtung ist vorgesehen, daß die Lauthöreinrichtung mit einer Freigabeüberprüfung versehen ist.

Zur Beendigung einer Aktivierung des Lautsprechers bei einer Gesprächsbeendigung ohne vorhergehende Deaktivierung der Lauthöreinrichtung wird vorgeschlagen, daß die Lauthöreinrichtung mit einer Rauschabschaltung versehen ist.

Zur Gewährleistung einer definierten Gerätezuordnung ist es zweckmäßig, daß im Bereich der Übertragungsstrecke ein Kennungsaustausch durchgeführt ist.

Eine hohe Variabilität bei einer Benutzung wird dadurch unterstützt, daß die Lauthöreinrichtung mit einer Batteriespeisung versehen ist.

Eine andere Möglichkeit zur Energieversorgung besteht darin, daß die Lauthöreinrichtung mit einer Netzspeisung versehen ist.

Zur Gewährleistung eines großen Bedienungskomforts wird vorgeschlagen, daß zur Aktivierung und Deaktivierung der Lauthöreinrichtung im Bereich des Mobilteiles eine Taste angeordnet ist.

Ein Betrieb der Lauthöreinrichtung wird dadurch ermöglicht, daß die Lauthöreinrichtung als Nebenempfänger an die Übertragungsstrecke angekoppelt ist.

In der Zeichnung sind Ausführungsbeispiele der Erfindung schematisch dargestellt. Es zeigen:
- Fig. 1: ein vereinfachtes Blockschaltbild zur Veranschaulichung der drahtlosen Übertragungswege
**und**
- Fig. 2: ein vereinfachtes Blockschaltbild der Lauthöreinrichtung.

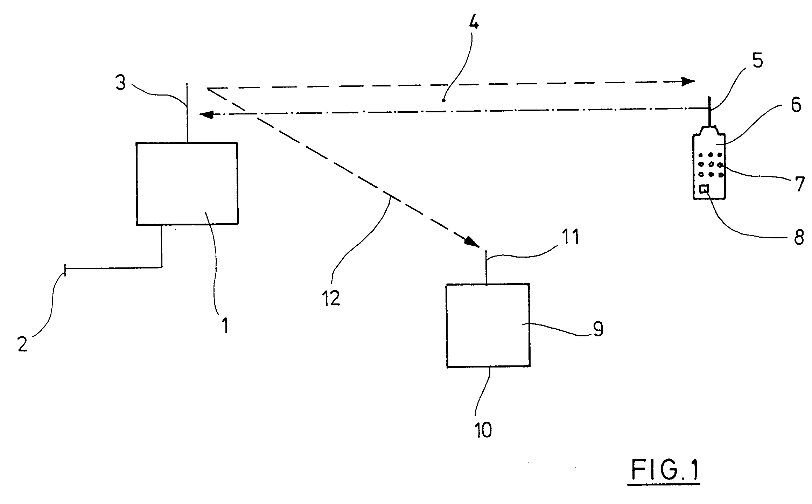

In Fig. 1 ist dargestellt, daß eine Basisstation (1) über einen Kommunikationsanschluß mit einer Anschlußdose (2) (TAE) verbunden ist. Die Anschlußdose (2) stellt den Übergabepunkt zum Kommunikationsnetz dar. Die Basisstation (1) ist mit einer Antenne (3) versehen, die eine Übertragungsstrecke (4) zu einer Antenne (5) eines Mobilteiles (6) aufspannt. Die Übertragungsstrecke (4) ist bidirektional ausgebildet und ermöglicht sowohl ein Senden als auch ein Empfangen. Das Mobilteil (6) ist konventionell mit einer Tastatur (7) versehen und weist zusätzlich eine Taste (8) zur Aktivierung beziehungsweise Deaktivierung einer Lauthöreinrichtung (9) auf.

Die Lauthöreinrichtung (9) ist in einem Gehäuse (10) angeordnet, das separat von der Basisstation (1) ausgebildet ist. Zur Ermöglichung einer Kommunikation mit der Basisstation (1) weist die Lauthöreinrichtung (9) eine Antenne (11) auf. Zwischen der Antenne (3) und der Antenne (11) ist eine Übertragungsstrecke (12) aufgespannt, die vorzugsweise eine unidirektionale Datenübertragung von der Basisstation (1) zur Lauthöreinrichtung (9) zuläßt.

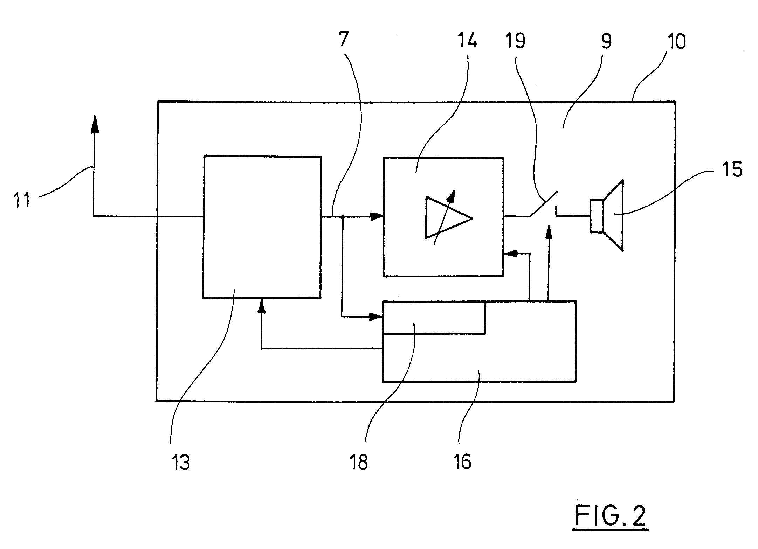

In Fig. 2 ist ein Blockschaltbild der Lauthöreinrichtung (9) angegeben. Es ist ersichtlich, daß die Antenne (11) an einen Empfänger (13) angeschlossen ist, der als ein Hochfrequenzteil ausgebildet ist. Der Empfänger (13) ist mit einem Verstärker (14) verbunden, der als ein Niederfrequenzteil ausgebildet ist. Der Verstärker (14) speist einen Lautsprecher (15).

Der Empfänger (13) und der Verstärker (14) werden von einer Steuerung (16) kontrolliert. Die Steuerung (16) weist einen Eingang auf, der an eine Verbindungsleitung (7) zwischen dem Empfänger (13) und dem Verstärker (14) angeschlossen ist. Die Eingangssignale werden einem Demodulator (18) zugeführt. Ein weiterer Ausgang der Steuerung (16) ist zur Kontrolle eines Schalters (19) vorgesehen, der zwischen dem Verstärker (14) und dem Lautsprecher (15) angeordnet ist.

Die Lauthöreinrichtung (9) kann batteriegespeist oder netzgespeist ausgebildet sein. Der Empfänger (13) arbeitet als Nebenempfänger (Slave Receiver), der sich auf einen belegten Kanal der Übertragungsstrecke (4) aufschalten kann. Die Steuerung (16) der Lauthöreinrichtung (9) trägt dafür Sorge, daß alle im Bereich der Übertragungsstrecke (4) verfügbaren Kanäle gescannt werden. Dies erfolgt durch eine Frequenzfortschaltung. Wird ein belegter Kanal ermittelt, so wird von der Steuerung (16) überprüft, ob eine Kennung für das zugehörige Mobilteil (6) vorliegt. Ist dies nicht der Fall, so wird der Suchvorgang fortgesetzt. Für den Fall einer Ermittlung einer zutreffenden Kennung wird von der Steuerung (16) überprüft, ob die ermittelte Kennung eine Freigabe zur Aktivierung der Lauthöreinrichtung (9) enthält. Ist dies der Fall, so wird über den Verstärker (14) der Lautsprecher (15) angesteuert, in dem die Steuerung (16) den Schalter (19) schließt.

Die Freigabe der Lauthöreinrichtung (9) erfolgt vom Mobilteil (6) aus über die Taste (8), die entweder als reale elektrische Taste oder als entsprechende Steuerungseingabe ausgebildet sein kann. Das Mobilteil (6) sendet die zugehörigen Anweisungen über die Übertragungsstrecke (4) an die Basisstation (1) und von hier erfolgt eine Weiterübertragung über die Übertragungsstrecke (12) an die Lauthöreinrichtung (9). Insbesondere ist daran gedacht, die Übermittlung der entsprechenden Steuerinformationen über den zyklischen Codeaustausch zwischen der Basisstation (1) und dem Mobilteil (6) durchzuführen.

Insbesondere ist bei der Übertragung der zugehörigen Steuercodes daran gedacht, zunächst eine Übertragung vom Mobilteil (6) zur Basisstation (1) und anschließend eine Rückübertragung von der Basisstation (1) zum Mobilteil (6) durchzuführen. Dies führt zu einer vereinfachten Kommunikation zwischen der Basisstation (1) und der Lauthöreinrichtung (9), da die Lauthöreinrichtung (9) bei dieser Ausführungsform lediglich als Nebenempfänger den Übertragungskanal von der Basisstation (1) in Richtung auf das Mobilteil (6) überwachen muß.

Wird ein Gespräch beendet, ohne daß zuvor durch den Schalter (8) die Lauthöreinrichtung (9) deaktiviert wurde, so erfolgt ein automatisches Ausschalten der Lauthöreinrichtung (9) durch eine Rauschunterdrückung (Sqelch-Schaltung).

Zur Gewährleistung einer ausreichenden Abhörsicherheit trägt die Durchführung des Kennungsaustausches bei. Insbesondere bei einem Anschluß von mehreren Mobilteilen (6) an eine gemeinsame Basisstation (1) ist es grundsätzlich möglich, jedem der Mobilteile (6) eine separate Lauthöreinrichtung (9) zuzuordnen.

## Patentansprüche

1. Lauthöreinrichtung für schnurlose Telefone, bei denen mindestens ein Mobilteil schnurlos von einer Übertragungsstrecke mit einer Basisstation gekoppelt ist, dadurch gekennzeichnet, daß die Lauthöreinrichtung (9) als ein in einem getrennt von der Basisstation (1) und getrennt vom Mobilteil (6) ausgebildeten Gehäuse angeordneter Lautsprecher (15) ausgebildet ist, der von einem Verstärker (14) gespeist ist, daß der Verstärker (14) mit einem Empfänger (13) verbunden ist, der von einer Steuerung (16) eingestellt ist und der über eine drahtlose Übertragungsstrecke (12) mit der Basisstation (1) verbunden ist und daß die Steuerung (16) zur Kanalüberwachung eine Frequenzfortschaltung aufweist, die nacheinander alle empfangbaren Kanäle anspricht, um bei einer Erkennung eines belegten Kanales eine Kanalkennungsüberprüfung zu aktivieren, die den Lautsprecher (16) bei einer Erkennung des zugeordneten Mobilteils (6) und einer Erkennung eines Lauthörsignals einschaltet und daß die drahtlose Übertragungsstrecke (12) zusätzlich zu der drahtlosen Übertragungsstrecke (4) zwischen der Basisstation (1) und dem Mobilteil (6) vorgesehen ist.

2. Telefon nach Anspruch 1, dadurch gekennzeichnet, daß die Lauthöreinrichtung (9) mit einer Freigabeüberprüfung versehen ist.

3. Telefon nach Anspruch 1 oder 2, dadurch gekennzeichnet, daß die Lauthöreinrichtung (9) mit einer Rauschabschaltung versehen ist.

4. Telefon nach einem der Ansprüche 1 bis 3, dadurch gekennzeichnet, daß im Bereich der Übertragungsstrecke (4) ein Kennungsaustausch durchgeführt ist.

5. Telefon nach einem der Ansprüche 1 bis 4, dadurch gekennzeichnet, daß die Lauthöreinrichtung (9) mit einer Batteriespeisung versehen ist.

6. Telefon nach einem der Ansprüche 1 bis 5, dadurch gekennzeichnet, daß die Lauthöreinrichtung (9) mit einer Netzspeisung versehen ist.

7. Telefon nach einem der Ansprüche 1 bis 6, dadurch gekennzeichnet, daß zur Aktivierung und Deaktivierung der Lauthöreinrichtung (9) im Bereich des Mobilteiles (6) eine Taste (8) angeordnet ist.

8. Telefon nach einem der Ansprüche 1 bis 7, dadurch gekennzeichnet, daß die Lauthöreinrichtung (9) als Nebenempfänger an die Übertragungsstrecke (4) angekoppelt ist.
